# EUROPEAN PATENT SPECIFICATION

(11) **EP 3 566 776 B1**
(45) Date of publication and mention of the grant of the patent: **04.11.2020**
(21) Application number: 19173225.4
(22) Date of filing: 08.05.2019
(51) Int. Cl.: B02C 7/06, B02C 7/12, B02C 7/175, A23G 1/12

(54) **APPARATUS FOR REFINING COCOA**
VORRICHTUNG ZUM RAFFINIEREN VON KAKAO
APPAREIL D'AFFINAGE DU CACAO

(30) Priority: 11.05.2018 IT 201800005272
(43) Date of publication of application: 13.11.2019
(73) Proprietor: Selmi S.r.l., 12069 Santa Vittoria d'Alba (Cuneo) (IT)
(72) Inventor: SELMI, Paolo, 12069 Santa Vittoria d'Alba (Cuneo) (IT)
(74) Representative: Frontoni, Stefano

(56) References cited:
- GB-A- 159 527
- GB-A- 191 100 752
- US-A- 2 204 057

## Description

The present invention relates to an apparatus for refining cocoa, of the type comprising:
- a disk rotating about an axis of rotation, which is provided on both of its opposite sides with a plurality of teeth; and
- a pair of fixed and opposed plates, positioned between which is said rotating disk, each plate facing a corresponding side of said disk and being provided with a plurality of teeth configured for co-operating with the plurality of teeth of the corresponding side of said rotating disk.

A refining apparatus of the type referred to above is, for example, described in the document No. GB191100752 A.

The object of the present invention is to provide an apparatus of the type in question that will be improved both from the standpoint of operation and from the constructional standpoint.

The above object is achieved by a refining apparatus according to Claim 1.

The claims specified hereinafter form an integral part of the technical teaching provided herein.

Further characteristics and advantages of the invention will emerge clearly from the ensuing description, with reference to the annexed drawings, which are provided purely by way of non-limiting example and in which:

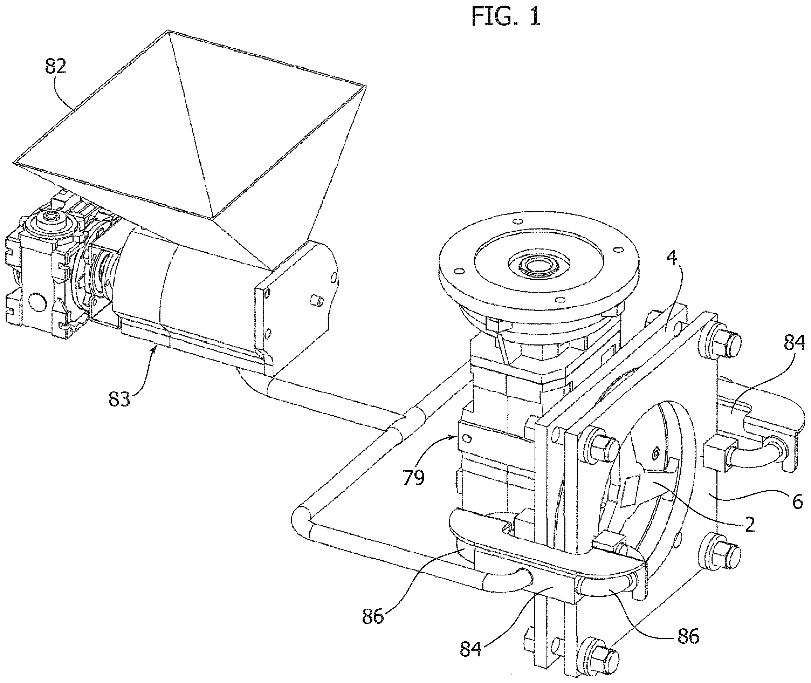

- Figure 1 illustrates a preferred embodiment of the refining apparatus described herein, according to a perspective view;
- Figure 2 is an exploded view of the apparatus of Figure 1;
- Figure 3 represents in a schematic way operation of the apparatus of Figure 1;

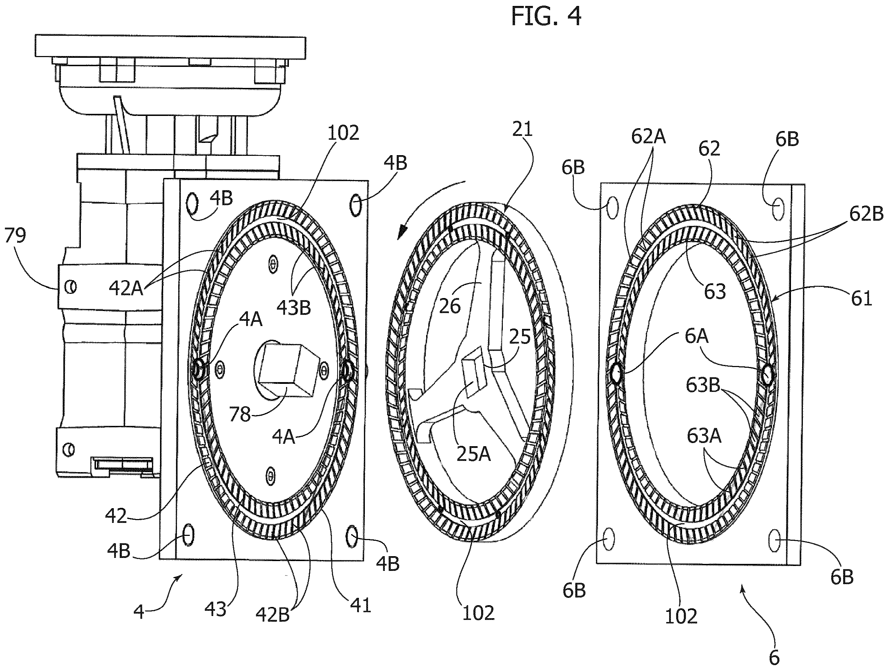

- Figure 4 is an exploded view of the cocoa-processing unit of the apparatus of Figure 1;

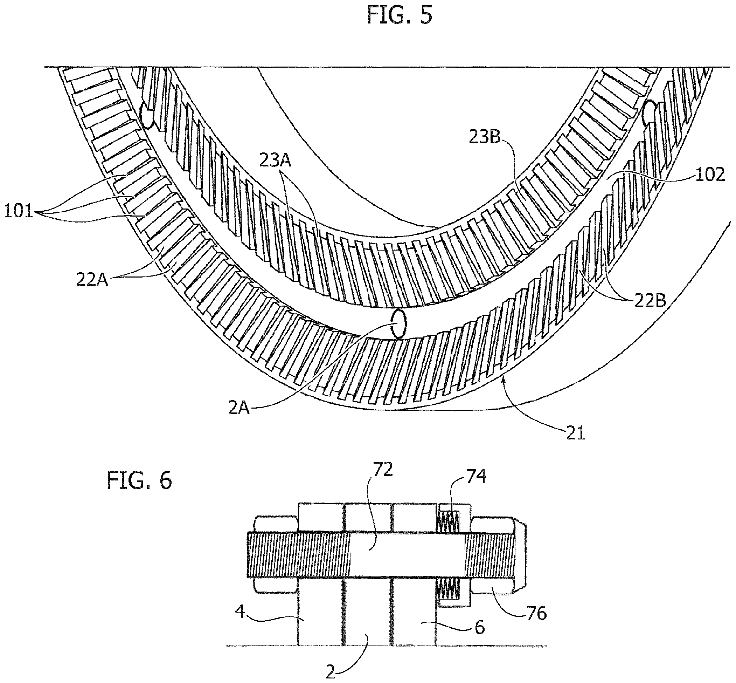

- Figure 5 illustrates the detail A referred to in Figure 4; and
- Figure 6 is a cross-sectional view of a detail of the processing unit illustrated in Figure 4.

In the ensuing description, various specific details are illustrated aimed at enabling an in-depth understanding of the embodiments. The embodiments may be provided without one or more of the specific details, or with other methods, components, or materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

As mentioned above, the apparatus described herein operates for refining cocoa and more precisely the raw cocoa mass that is obtained following upon pressing of the roasted cocoa beans.

The refining process envisages further reduction of the size of the grains contained in the raw mass in order to obtain a substantially fluid mass containing granules having a size of preferably less than 80 µm.

The above process is basically performed by grinding means, which may be of various types.

For instance, the use is known of ball mills and rotating-disk apparatuses, such as the apparatus described in the document GB191100752A referred to above.

In this type of mechanical processes, process duration represents a critical parameter since the mechanical stresses to which the cocoa is subjected may cause an alteration of its organoleptic characteristics as a result of the increase in temperature and of the chemical reactions that these stresses are able to induce.

In this context, the refining apparatus described herein is prearranged for carrying out a refining process that will be substantially faster than the processes carried out by the apparatuses so far known.

As anticipated above, like the known solution of GB191100752A, the apparatus described herein comprises (see the annexed drawings):
- a disk 2 rotating about an axis of rotation, which is provided, on both of its opposite sides, with a plurality of teeth; and
- a pair of opposed fixed plates 4, 6, positioned between which is the rotating disk 2.

Each plate faces a corresponding side of the disk 2 and is provided with a plurality of teeth configured for co-operating with the plurality of teeth of the corresponding side of the disk 2.

The apparatus described herein is distinguished from the solution known from the document GB191100752A by being characterized in that:
- each side of the disk 2 comprises a channel 21, which extends along a closed profile about the axis of rotation I and is delimited by two mutually facing conical surfaces 22, 23, defined by respective mutually intersecting generatrices and by an axis of revolution corresponding to the axis of rotation I;
- obtained on the conical surfaces 22, 23 are respective circular series of teeth 22B, 23B, which have cutting edges oriented in a direction transverse with respect to the circular profile followed by the aforesaid series of teeth;
- the plates 4, 6 comprise respective channels 41, 61 corresponding to the channels 21 of the disk 2, which extend along closed profiles about the axis of rotation I, facing the channels 21 of the disk 2, and are each delimited by two mutually facing conical surfaces 42, 43, and 62, 63, respectively, defined by respective mutually intersecting generatrices and by an axis of revolution corresponding to the axis of rotation I; and
- obtained on the conical surfaces 42, 43 and 62, 63 are respective circular series of teeth 42B, 43B, and 62B, 63B, which are designed to co-operate with the corresponding series of teeth 22B, 23B and have cutting edges oriented in a direction transverse with respect to the circular profile followed by the aforesaid series of teeth.

In various preferred embodiments, as in the one illustrated, the channels mentioned above all have a bottom 102, which also extends along a closed profile about the axis of rotation I and separates the two conical surfaces of the channel.

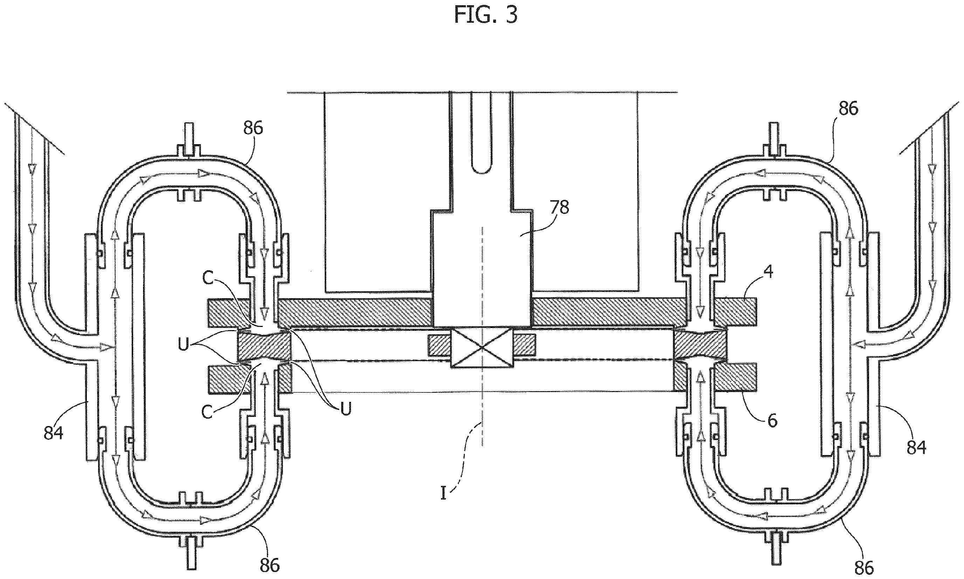

With reference to Figure 3, each channel 21 of the disk 2 forms, together with the channel 41 or 61 facing it, an annular chamber C into which the cocoa to be processed is introduced.

In various preferred embodiments, as in the one illustrated, the plates 4 and 6 have one or more openings 4A, 6A for introduction from outside of cocoa into the chamber C, which open out onto the bottom of the respective channel.

In various preferred embodiments, as in the one illustrated, within one and the same plate, the openings designated by 4A and 6A are obtained in diametrally opposite positions with respect to the axis of rotation I so as to obtain an even distribution of cocoa along the chamber C.

Moreover, the disk 2 itself has one or more through openings 2A, which open out onto the bottom of the two channels 21 and are designed to set the two chambers C in communication with one another on the two opposite sides of the disk 2.

Thanks to this configuration, the two chambers C are at one and the same pressure, and the stresses on the disk 2 are consequently balanced.

Once again in order to obtain a balancing of the stresses on the disk 2, the openings 4A and 6A for introduction of cocoa into the chambers C are located in corresponding angular positions.

In the embodiment illustrated, the plates 4 and 6 each have a pair of respective openings 4A, 6A that are located in the angular positions corresponding to 0° and 180°.

Defined between the opposed edges, respectively, of the disk 2 and of the plates 4 and 6, which laterally delimit the respective channels 21, 41 and 61, are annular slits U, of pre-set dimensions, for outlet of cocoa from the chambers C.

The width of the aforesaid slits evidently determines the degree of refining of cocoa, since only granules of smaller size can come out of the aforesaid chambers C.

With reference now to the teeth made on the disk 2 and on the plates 4 and 5, these have cutting edges 101 that are not contained in the radial plane of the conical surfaces on which the teeth are provided, but are oriented in a direction transverse to the aforesaid plane; in particular, the teeth of two series that are to co-operate with one another are oriented differently so that, in one and the same radial plane, the cutting edge of the single tooth of one series and the cutting edge of the single tooth of the other series will be arranged with respect to one another according to a cross configuration.

The aforesaid configuration of the teeth exerts, as a result of the relative rotation between the disk 2 and the plates 4 and 5, a shearing action on the cocoa by the individual pairs of teeth co-operating with one another that develops along the cutting edges of the two teeth in a progressive way.

In various preferred embodiments, as in the one illustrated, the series of teeth in question - 22B, 23B, 42B, 43B, 62B, 63B - are the result of a milling operation carried out on the conical surfaces, whereby there are obtained corresponding series of grooves - designated by the references 22A, 23A, 42A, 43A, 62A, 63A - that follow one another throughout the perimetral extension of the conical surfaces and that delimit the individual teeth two by two.

The cutting edges 101 of the teeth are defined by the lines of intersection between the conical surfaces and the side walls of the aforesaid grooves.

In line with what has been said above, in various preferred embodiments, as in the one illustrated, the grooves in question are not contained in the radial plane of the conical surfaces on which they are obtained, but are oriented in a direction transverse to the aforesaid plane. Moreover, the grooves of two series that define series of teeth that are to co-operate with one another are oriented differently so that the teeth defined by the two series present according to the cross-like mutual arrangement referred to above.

The plates 4 and 6 are connected together via fastening members of a conventional type in combination with elastic means that act by pushing one of the two plates against the other.

In various preferred embodiments, as in the one illustrated, these fastening members comprise a series of screws 72 that pass through corresponding openings 4B, 6B made in the plates 4 and 6, positioned on the ends of which are Belleville washers 74 that are packed against the plate 6 by respective nuts 76 screwed on the ends themselves of the screws. Clearly, the Belleville washers referred to may be replaced by elastic elements of some other type, for example, helical springs.

The means referred to above enable regulation of the distance between the plates 4 and 6 and the disk 2 and hence the width of the slits U referred to above, which, as has been said, determine the degree of refining of the cocoa. Moreover, the pre-loading imposed on the elastic means referred to determines the maximum pressure that can be set up within the chambers C.

On the other hand, the elastic means referred to above enable the two plates 4 and 6 to move away from one another to allow any possible foreign bodies that were to reach the chambers C to flow away, thus preventing jamming of the disk 2.

In alternative embodiments, it is also possible to provide spacer rings mounted on the screws 72, instead of the elastic means referred to above.

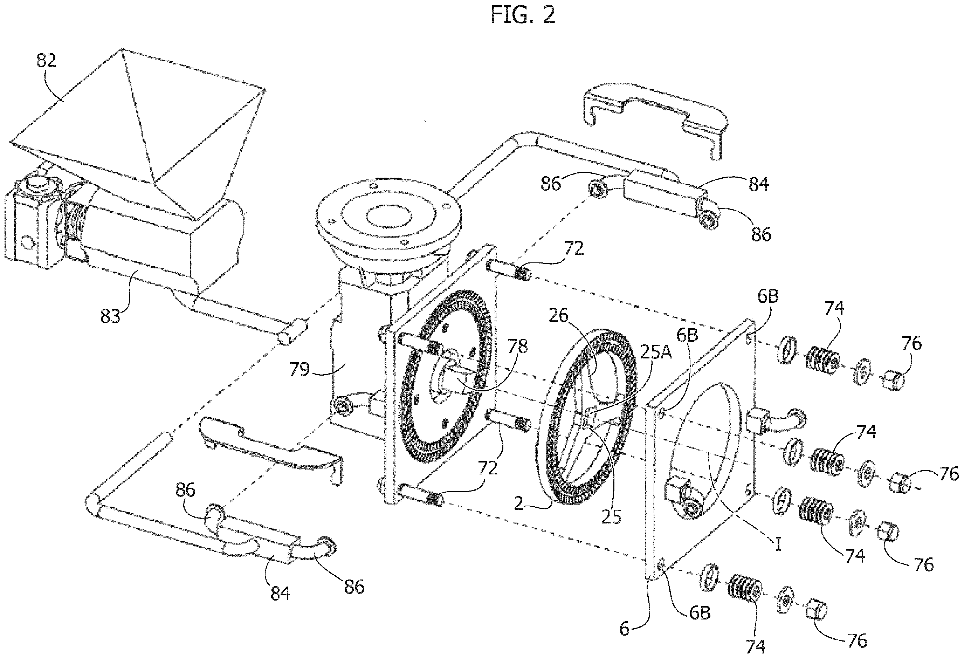

To return to Figure 2, the disk 2 has a central hub 25 connected to the peripheral circular portion via arms 26. The central hub 25 is provided with an opening 25A having a polygonal, preferably square, profile, through which the disk 2 is mounted on the end, having a corresponding profile, of a shaft 78, which is oriented along the axis of rotation I and passes through a central opening provided in the plate 4. This shaft is driven in rotation by a motor reducer 79.

With reference now to the supply of cocoa to the grinding assembly described, the apparatus comprises a hopper 82 in which the cocoa to be processed is poured, set underneath which is a pump or motor-driven pump assembly 83, which supplies a system of ducts prearranged for conveying the cocoa to the openings 4A and 6A, distributing it in equal parts between the two chambers C.

In particular, the above system comprises one or more headers 84 from which there branch off pipes 86 of equal length that connect up in twos to pairs of openings 4a and 6A that are located in exactly opposite positions on the plates 4 and 6.

In the embodiment illustrated, the headers 84 are two in number, one for each of the opposite pairs of openings 4A and 6A provided in the plates 4 and 6.

As has been seen above, the cocoa reaches the chambers C through the aforesaid openings 4A and 6A.

With reference now to operation of the apparatus, the cocoa present in the hopper 82 drops by gravity into the motor-driven pump 83 and, by means of this is sent to the headers 84, and from here to the openings 4A and 6A.

The cocoa is injected through these openings into the chambers C, in a middle position with respect to the width of the individual chamber in the radial direction.

The relative rotation between the disk 2 and the plates 4 and 6 pushes the cocoa towards the two opposite sides of the chambers C and brings about an action of pressing and shearing by the series of teeth on the cocoa, which is thus reduced to a finer grain size.

The cocoa granules that have reached a size smaller than the width of the slits U defined between the disk 2 and the plates 4 and 6, through the aforesaid slits come out of the chambers C, both towards the inside and towards the outside of the disk, and gather by gravity in a container (not visible) set underneath the grinding unit. On the other hand, the cocoa that comes out of the slits constitutes a lubricating film that reduces friction between the disk 2 and the plates 4 and 6.

It should be noted that the cocoa is rapidly brought to the pre-defined size thanks to the intense grinding action exerted by the series of teeth described above so that it remains inside the chambers C for a very short time (in the region of a few seconds), which is substantially less than the time necessary, instead, for the machines of the prior art described at the start (approximately one hour).

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. An apparatus for refining cocoa, comprising:
- a disk (2), rotating about an axis of rotation (I), which is provided, on both of its opposite sides, with a plurality of teeth; and
- a pair of fixed plates (4, 6) opposed to one another, positioned between which is said rotating disk (2), each plate facing a corresponding side of said disk (2) and being provided with a plurality of teeth configured for co-operating with the plurality of teeth of said corresponding side of said rotating disk;
said apparatus being **characterised in that**:
- each side of said disk (2) comprises a channel (21), which extends along a closed profile about said axis of rotation (I) and is delimited by two facing conical surfaces (22, 23), defined by respective mutually intersecting generatrices and by an axis of revolution corresponding to said axis of rotation (I);
- obtained on said first conical surfaces (22, 23) are first circular series of teeth (22B, 23B) that have cutting edges (101) oriented in a direction transverse with respect to the circular profiles followed by the respective series of teeth;
- each plate (4, 6) comprises a channel (41, 61), which extends along a closed profile about said axis of rotation (I), facing said channel (21) of said corresponding side of said disk (2), and is delimited by two facing conical surfaces (42, 43, 62, 63), defined by respective mutually intersecting generatrices and by an axis of revolution corresponding to said axis of rotation (I); and
- obtained on said second conical surfaces (42, 43, 62, 63) are second circular series of teeth (42B, 43B, 62B, 63B), which are designed to co-operate with said first series of teeth (22B, 23B) and have cutting edges (101) oriented in a direction transverse with respect to the circular profiles followed by the respective series of teeth.

2. The apparatus according to Claim 1, wherein the cutting edges (101) of the teeth of said series are not contained in a corresponding radial plane of the conical surfaces on which they are obtained, but are oriented in a direction transverse to said plane, and wherein the teeth of two series of teeth designed to co-operate are oriented differently so that in one and the same radial plane the cutting edge of a tooth of one series and the cutting edge of a tooth of the other series will be arranged with respect to one another according to a cross configuration.

3. The apparatus according to Claim 1 or Claim 2, wherein said series of teeth (22B, 23B, 42B, 43B, 62B, 63B) are the result of a milling operation carried out on said conical surfaces (22, 23, 42, 43, 62, 63), whereby there are obtained corresponding series of grooves (22A, 23A, 42A, 43A, 62A, 63A) that follow one another throughout the perimetral extension of said conical surfaces and that delimit the individual teeth two by two.

4. The apparatus according to Claim 3, wherein said cutting edges of said teeth are defined by the edges of intersection between said conical surfaces (22, 23, 42, 43, 62, 63) and the side walls of said grooves (22A, 23A, 42A, 43A, 62A, 63A).

5. The apparatus according to any one of the preceding claims, wherein each channel (21) of said disk and said corresponding channel (41, 61) of said plate form an annular chamber (C), said plate having one or more openings (4A, 6A) for introduction of cocoa into said annular chamber (C) that are arranged in a position between the conical surfaces (42, 43, 62, 63) that delimit said channel, and wherein the opposed edges of said disk (2) and of said plate (4, 6), which delimit said channels (21, 41, 61) laterally, constitute an annular slit (U), of pre-set dimensions, for exit of cocoa from said chamber.

6. The apparatus according to any one of the preceding claims, wherein on each side of said disk (2) said channel (21) is obtained in a peripheral part of said disk.

7. The apparatus according to any one of the preceding claims, wherein each channel (21, 41, 61) has a circular bottom (102), which extends about said axis of rotation (I) and separates the conical surfaces that define said channel (22, 23, 42, 43, 62, 63).

8. The apparatus according to Claim 7, wherein said disk has one or more through openings (2A), which open out onto each side of said disk, on said bottom of the respective channel, to set the two opposite sides of said disk in communication.

9. The apparatus according to Claim 7, wherein the channel (41, 61) of each plate (4, 6) has on said bottom one or more openings (4A, 6A) for introduction of cocoa into said channel.

10. The apparatus according to Claim 9, wherein in each plate (4, 6) said openings (4A, 6A) are arranged in diametrally opposite positions, and wherein between one plate and the other said openings (4A, 6A) are arranged in corresponding positions.

## Patentansprüche

1. Vorrichtung zum Raffinieren von Kakao, umfassend:
- eine Scheibe (2), die sich um eine Drehachse (I) dreht und die auf ihren beiden entgegengesetzten Seiten mit einer Mehrzahl von Zähnen versehen ist; und
- ein Paar einander gegenüber befindlicher feststehender Platten (4, 6), zwischen denen sich die Drehscheibe (2) befindet, wobei jede Platte einer entsprechenden Seite der Scheibe (2) zugewandt und mit einer Mehrzahl von Zähnen versehen ist, die dazu ausgestaltet sind, mit der Mehrzahl von Zähnen der entsprechenden Seite der Drehscheibe zusammenzuwirken;
wobei die Vorrichtung **dadurch gekennzeichnet ist, dass**:
- jede Seite der Scheibe (2) einen Kanal (21) umfasst, der sich entlang eines geschlossenen Profils um die Drehachse (I) herum erstreckt und von zwei einander zugewandten konischen Flächen (22, 23) begrenzt ist, die durch jeweilige sich gegenseitig kreuzende Mantellinien und durch eine Umdrehungsachse, die der Drehachse (I) entspricht, definiert sind;
- auf den ersten konischen Flächen (22, 23) erste kreisförmige Zahnreihen (22B, 23B) erhalten werden, die Schneidkanten (101) aufweisen, die in einer Richtung quer zu den kreisförmigen Profilen, denen die jeweiligen Zahnreihen folgen, ausgerichtet sind;
- jede Platte (4, 6) einen Kanal (41, 61) umfasst, der sich entlang eines geschlossenen Profils um die Drehachse (I) herum erstreckt, dem Kanal (21) der entsprechenden Seite der Scheibe (2) zugewandt ist und von zwei einander zugewandten konischen Flächen (42, 43, 62, 63) begrenzt ist und durch jeweilige sich gegenseitig kreuzende Mantellinien und durch eine Umdrehungsachse, die der Drehachse (I) entspricht, definiert ist; und
- auf den zweiten konischen Flächen (42, 43, 62, 63) zweite kreisförmige Zahnreihen (42B, 43B, 62B, 63B) erhalten werden, die dazu gestaltet sind, mit den ersten Zahnreihen (22B, 23B) zusammenzuwirken, und Schneidkanten (101) aufweisen, die in einer Richtung quer zu den kreisförmigen Profilen, denen die jeweiligen Zahnreihen folgen, ausgerichtet sind.

2. Vorrichtung nach Anspruch 1, wobei die Schneidkanten (101) der Zähne der Reihen nicht in einer entsprechenden radialen Ebene der konischen Flächen, auf denen sie erhalten werden, enthalten sind, sondern in einer Richtung quer zu der Ebene ausgerichtet sind, und wobei die Zähne von zwei Zahnreihen, die dazu gestaltet sind zusammenzuwirken, unterschiedlich ausgerichtet sind, sodass in ein- und derselben radialen Ebene die Schneidkante eines Zahnes einer Reihe und die Schneidkante eines Zahnes der anderen Reihe in Bezug zueinander gemäß einer Kreuzform angeordnet sind.

3. Vorrichtung nach Anspruch 1 oder Anspruch 2, wobei die Zahnreihen (22B, 23B, 42B, 43B, 62B, 63B) das Ergebnis eines an den konischen Flächen (22, 23, 42, 43, 62, 63) ausgeführten Fräsvorganges sind, wodurch entsprechende Nutreihen (22A, 23A, 42A, 43A, 62A, 63A) erhalten werden, die über die Umfangserstreckung der konischen Flächen hinweg aufeinander folgen und jeweils zwei einzelne Zähne begrenzen.

4. Vorrichtung nach Anspruch 3, wobei die Schneidkanten der Zähne von den Schnittkanten zwischen den konischen Flächen (22, 23, 42, 43, 62, 63) und den Seitenwänden der Nuten (22A, 23A, 42A, 43A, 62A, 63A) definiert sind.

5. Vorrichtung nach einem der vorangehenden Ansprüche, wobei jeder Kanal (21) der Scheibe und der entsprechende Kanal (41, 61) der Platte eine ringförmige Kammer (C) ausbilden, wobei die Platte eine oder mehrere Öffnungen (4A, 6A) zum Einbringen von Kakao in die ringförmige Kammer (C) aufweist, die in einer Position zwischen den konischen Flächen (42, 43, 62, 63), die den Kanal begrenzen, angeordnet sind, und wobei die entgegengesetzten Kanten der Scheibe (2) und der Platte (4, 6), die die Kanäle (21, 41, 61) seitlich begrenzen, einen ringförmigen Schlitz (U) mit vorbestimmten Abmessungen zum Austritt von Kakao aus der Kammer bilden.

6. Vorrichtung nach einem der vorangehenden Ansprüche, wobei der Kanal (21) auf jeder Seite der Scheibe (2) in einem peripheren Teil der Scheibe erhalten wird.

7. Vorrichtung nach einem der vorangehenden Ansprüche, wobei jeder Kanal (21, 41, 61) einen kreisförmigen Boden (102) aufweist, der sich um die Drehachse (I) herum erstreckt und die konischen Oberflächen trennt, die den Kanal (22, 23, 42, 43, 62, 63) definieren.

8. Vorrichtung nach Anspruch 7, wobei die Scheibe eine oder mehrere Durchgangsöffnungen (2A) auf dem Boden des jeweiligen Kanals aufweist, die zu jeder Seite der Scheibe hin offen sind, um die beiden entgegengesetzten Seiten der Scheibe in Verbindung zu bringen.

9. Vorrichtung nach Anspruch 7, wobei der Kanal (41, 61) jeder Platte (4, 6) auf dem Boden eine oder mehrere Öffnungen (4A, 6A) zum Einbringen von Kakao in den Kanal aufweist.

10. Vorrichtung nach Anspruch 9, wobei in jeder Platte (4, 6) die Öffnungen (4A, 6A) in diametral entgegengesetzten Positionen angeordnet sind, und wobei die Öffnungen (4A, 6A) zwischen einer Platte und der anderen in entsprechenden Positionen angeordnet sind.

## Revendications

1. Appareil d'affinage du cacao, comprenant :
- un disque (2), qui tourne autour d'un axe de rotation (I) qui est équipé, sur deux de ses côtés opposés, d'une pluralité de dents ; et
- une paire de plaques fixes (4, 6) opposées l'une à l'autre, entre lesquelles est positionné ledit disque rotatif (2), chaque plaque faisant face à un côté correspondant dudit disque (2) et étant équipée d'une pluralité de dents configurées de façon à coopérer avec la pluralité de dents dudit côté correspondant dudit disque rotatif ;
ledit appareil étant **caractérisé en ce que** :
- chaque côté dudit disque (2) comprend un canal (21) qui s'étend le long d'un profil fermé autour dudit axe de rotation (I) et est délimité par deux surfaces coniques opposées (22, 23), définies par des génératrices respectives se croisant mutuellement et par un axe de révolution correspondant audit axe de rotation (I) ;
- des premières séries circulaires de dents (22B, 23B) sont obtenues sur lesdites premières surfaces coniques (22, 23) qui ont des bords tranchants (101) orientés suivant une direction transversale par rapport aux profils circulaires suivis par les séries respectives de dents ;
- chaque plaque (4, 6) comprend un canal (41, 61) qui s'étend le long d'un profil fermé autour dudit axe de rotation (I), faisant face audit canal (21) dudit côté correspondant dudit disque (2) et est délimité par deux surfaces coniques opposées (42, 43, 62, 63), définies par des génératrices respectives se croisant mutuellement et par un axe de révolution correspondant audit axe de rotation (I) ; et
- des secondes séries circulaires de dents (42B, 43B, 62B, 63B) sont obtenues sur lesdites secondes surfaces coniques (42, 43, 62, 63), qui sont conçues de façon à coopérer avec lesdites premières séries de dents (22B, 23B) et ont des bords tranchants (101) orientés suivant une direction transversale par rapport aux profils circulaires suivis par les séries respectives de dents.

2. Appareil selon la revendication 1, dans lequel les bords tranchants (101) des dents desdites séries ne sont pas contenus dans un plan radial correspondant des surfaces coniques sur lesquelles ils sont obtenus, mais sont orientés suivant une direction transversale audit plan, et dans lequel les dents des deux séries de dents conçues pour coopérer sont orientées différemment de telle sorte que dans un seul et même plan radial le bord tranchant d'une dent d'une série et le bord tranchant d'une dent de l'autre série seront disposés l'un par rapport à l'autre selon une configuration transversale.

3. Appareil selon la revendication 1 ou la revendication 2, dans lequel lesdites séries de dents (22B, 23B, 42B, 43B, 62B, 63B) sont le résultat d'une opération de meulage exécutée sur lesdites surfaces coniques (22, 23, 42, 43, 62, 63), moyennant quoi des séries de renfoncements correspondants (22A, 23A, 42A, 43A, 62A, 63A) sont obtenus qui se suivent l'un l'autre tout au long du prolongement périmétrique desdites surfaces coniques et qui délimitent les dents individuelles deux par deux.

4. Appareil selon la revendication 3, dans lequel lesdits bords tranchants desdites dents sont définis par les bords d'intersection entre lesdites surfaces coniques (22, 23, 42, 43, 62, 63) et les parois latérales desdits renfoncements (22A, 23A, 42A, 43A, 62A, 63A).

5. Appareil selon l'une quelconque des revendications précédentes, dans lequel chaque canal (21) dudit disque et ledit canal correspondant (41, 61) de ladite plaque forment une chambre annulaire (C), ladite plaque ayant une ou plusieurs ouvertures (4A, 6A) pour l'introduction de cacao à l'intérieur de ladite chambre annulaire (C) qui sont disposées dans une position entre les surfaces coniques (42, 43, 62, 63) qui délimitent ledit canal, et dans lequel les bords opposés dudit disque (2) et de ladite plaque (4, 6), qui délimitent lesdits canaux (21, 41, 61) de manière latérale, constituent une fente annulaire (U), de dimensions prédéfinies, pour la sortie du cacao depuis ladite chambre.

6. Appareil selon l'une quelconque des revendications précédentes, dans lequel sur chaque côté dudit disque (2) ledit canal (21) est obtenu dans une partie périphérique dudit disque.

7. Appareil selon l'une quelconque des revendications précédentes, dans lequel chaque canal (21, 41, 61) a un fond circulaire (102), qui s'étend autour dudit axe de rotation (I) et sépare les surfaces coniques qui définissent ledit canal (22, 23, 42, 43, 62, 63).

8. Appareil selon la revendication 7, dans lequel ledit disque a une ou plusieurs ouvertures traversantes (2A) qui s'ouvrent sur chaque côté dudit disque, sur ledit fond du canal respectif, pour définir les deux côtés opposés dudit disque en communication.

9. Appareil selon la revendication 7, dans lequel le canal (41, 61) de chaque plaque (4, 6) a sur ledit fond une ou plusieurs ouvertures (4A, 6A) pour l'introduction de cacao à l'intérieur dudit canal.

10. Appareil selon la revendication 9, dans lequel dans chaque plaque (4, 6), lesdites ouvertures (4A, 6A) sont disposées dans des positions diamétralement opposées, et dans lequel entre une plaque et l'autre lesdites ouvertures (4A, 6A) sont disposées dans des positions correspondantes.
